# EUROPÄISCHE PATENTSCHRIFT

(11) **EP 1 172 313 B1**
(45) Veröffentlichungstag und Bekanntmachung des Hinweises auf die Patenterteilung: **06.10.2004**
(21) Anmeldenummer: 00116468.0
(22) Anmeldetag: 29.07.2000
(51) Int. Cl.: B65G 53/66, B65G 53/32

(54) **Vorrichtung zum Baustellen-Fördern von Trockenmörtel**
Device for conveying dry mortar on-site
Dispositif pour convoyer du mortier sec sur place

(30) Priorität: 12.07.2000 DE 20012067 U
(43) Veröffentlichungstag der Anmeldung: 16.01.2002
(73) Patentinhaber: Knauf PFT GmbH & Co. KG, 97346 Iphofen (DE)
(72) Erfinder: Irsch, Hans-Peter, Dipl.-Ing., 97350 Mainbernheim (DE)
(74) Vertreter: Böhme, Volker, Dipl.-Ing.

(56) Entgegenhaltungen:
- EP-A- 0 322 581
- DE-A- 3 105 463
- DE-A- 3 708 015
- DE-A- 19 514 377
- DE-A- 19 539 610

## Beschreibung

Die Erfindung betrifft eine Vorrichtung zum Baustellen-Fördern von Trockenmörtel, bei der eine Fördereinheit eingangsseitig an ein Drucksilo zur Aufnahme des Trockenmörtels angeschlossen ist und ausgangsseitig in einen Zwischenspeicher zur weiteren Verarbeitung des Trockenmörtels mündet, bei dem die Fördereinheit anschließend an das Drucksilo ein druckluftbetätigtes Trockenmörtel-Ventil und ein von diesem zu dem Zwischenspeicher führendes Förderrohr aufweist, bei der ein Druckluft-Kompressor an das Förderrohr über eine Förderluftleitung angeschlossen ist, in der ein Förderluftventil angeordnet ist, bei der vor dem Förderluftventil von der Förderluftleitung eine Nebenluftleitung zu einem Druckspeicher abzweigt, der über ein Steuerluftventil auf das Trockenmörtel-Ventil arbeitet, bei der eine im Zwischenspeicher angeordnete Füllstandssonde einer Steuereinheit zugehört, die über Steuerleitungen auf den Druckluft-Kompressor das Förderluftventil und das Steuerluftventil arbeitet, bei der bei tätigem Druckluft-Kompressor das Förderluftventil während einer Ladezeit für ein Aufladen des Druckspeichers auf GESCHLOSSEN gesteuert ist und bei der für einen von der Füllstandssonde geforderten Fördervorgang der Druckluft-Kompressor auf AN, das Trockenmörtel-Ventil auf OFFEN und das Förderluftventil auf OFFEN gesteuert sind.

Bei einer durch die Praxis bekannten Vorrichtung gibt es von dem Druckluft-Kompressor zu dem Förderrohr eine Verbindung nur über das Förderluftventil. Der Druckspeicher ist groß gestaltet, weist z. B. einen Inhalt von 20 ltr. auf, und soll mit einer Füllung eine Vielzahl von Schließungen des Trockenmörtel-Ventils bewirken. Wenn der große Druckspeicher entladen ist, wird bei tätigem Druckluft-Kompressor das Förderluftventil während einer langen Ladezeit auf GESCHLOSSEN gesteuert, um den großen Druckspeicher wieder aufzuladen. Während dieser langen Ladezeit kann kein Trockenmörtel durch das Förderrohr zu dem Zwischenspeicher gefördert werden. Es läßt sich bei der bekannten Vorrichtung nicht vermeiden, daß während der langen Ladezeit die Füllstandssonde das Zufördern weiteren Trockenmörtels verlangt und dann wegen des notwendigen und langen Ladevorgangs kein Trockenmörtel zugefördert wird. Wenn der große Druckkessel erschöpft ist, muß bei einem Ruf der Füllstandssonden nach Trockenmörtel erst der große Druckkessel wieder gefüllt werden. Dies führt zu Störungen bei der Verarbeitung des Trockenmörtels, der in der Regel in einer Misch-einrichtung mit Wasser zu einem pumpbaren Mörtel verarbeitet wird.

Eine Aufgabe der Erfindung ist es daher, eine Vorrichtung der eingangs genannten Art zu schaffen, bei der auch während des Aufladens des Druckspeichers dem Zwischenspeicher Trockenmörtel in ausreichender Menge zugefördert werden kann. Die erfindungsgemäße Vorrichtung ist, diese Aufgabe lösend, dadurch gekennzeichnet, daß das Förderluftventil von einem Bypass überbrückt ist und daß bei jedem Fördervorgang das Förderluftventil anfangs für die Ladezeit auf GESCHLOSSEN gesteuert ist.

Bei der erfindungsgemäßen Vorrichtung gelangt auch dann, wenn das Förderluftventil zwecks Aufladens des Druckspeichers geschlossen ist, über den Bypass in das Förderrohr Druckluft, die dem Zwischenspeicher Trockenmörtel zufördert. Die über den Bypass, der gedrosselt ist, gelangende Luftmenge ist nur eine Teilmenge der normalerweise erforderlichen Förderluftmenge. Diese Teilmenge genügt jedoch, um dem Zwischenspeicher genügend Trockenmörtel zuzuführen. Es ist nämlich die Ladezeit, d. h. die Zeit der jeweiligen Sperrung des Förderluftventils verkürzt, da bei jedem Fördervorgang in den Druckspeicher aufgeladen wird. Da bei jedem Fördervorgang aufgeladen wird, läßt sich der Druckspeicher klein gestalten, z. B. mit einem Inhalt von nur 3 ltr. gestalten. Da über den Bypass bei tätigem Druckluft-Kompressor ständig Förderluft strömt, kann das Förderluftventil verkleinert dimensioniert werden, da es nur die Differenz zwischen der normalerweise erforderlichen Förderluftmenge und der durch den Bypass hindurchtretenden Teilmenge passieren zu lassen hat. Ein kleiner zusätzlicher Kompressor für die Steuerung des Trockenmörtel-Ventils ist nicht erforderlich.

Bei einer Betriebsweise der Vorrichtung ist die Zuförderung zum Zwischenspeicher abgestellt und ist der Druckluft-Kompressor abgestellt. Wenn nun die Füllstandssonde Trockenmörtel verlangt, wird der Druckluft-Kompressor angestellt und gleichzeitig das Trockenmörtel-Ventil geöffnet. Das Förderluftventil wird um die kurze Ladezeit, von z. B. 3 sec. geschlossen gehalten und erst um die Ladezeit verzögert geöffnet. Bei einer zweiten Betriebsweise ist das Trockenmörtel-Ventil geschlossen und arbeitet der Druckluft-Kompressor noch, um das Förderrohr leer zu blasen, was z. B. 40 - 60 sec. dauert. Wenn während des Leerblas-Vorgangs die Füllstandssonde nach Trockenmörtel verlangt, arbeitet der Druckluft-Kompressor weiter, wird das Trockenmörtel-Ventil geöffnet und wird das Förderluftventil für die kurze Ladezeit geschlossen und danach ebenfalls geöffnet. Die Zuförderung von Trockenmörtel zum Zwischenspeicher ist trotz des Ladevorgangs im wesentlichen nicht unterbrochen und nicht beeinträchtigt, und zwar auch in Verbindung mit dem Leerblas-Vorgang nicht.

In dem Drucksilo steht der bevorratete Trockenmörtel unter einem Förderdruck von z. B. 1,7 bar. Es handelt sich nicht um ein Freifall-Silo mit Rüttler. Der Druck des Trockensilos wird ebenfalls vom Druckluft-Kompressor her erzeugt. Das druckluftbetätigte Trockenmörtel-Ventil ist in der Regel ein als Schlauchgebilde gestaltetes Quetschventil. Der Zwischenspeicher gehört in der Regel zu einer Mischeinrichtung, die eine Mischpumpe oder ein sonstiger Mischer ist. Da die hier zur Rede stehende Vorrichtung transportabel ist, ist von Bedeutung, daß sich die Vorrichtung aufgrund der Erfindung kompakter und leichter gestalten läßt. Das Wort "Förderrohr" steht hier auch für einen Förderschlauch. Das Förderrohr bzw. der Förderschlauch ist in der Regel relativ lang, z. B. länger als 100 Meter.

Besonders zweckmäßig und vorteilhaft ist es, wenn die Durchlaßquerschnitte des Förderluftventils und des Bypassses derart gestaltet sind, daß eine normalerweise benötigte Förderluftmenge zu 50 - 70 % durch den Bypass und zu 50 - 30 % durch das Förderluftventil strömt. Dies verdeutlicht zum einen die Verkleinerung des Förderluftventils und zum anderen die Verkleinerung der Luftmenge, die zum Aufladen des Druckspeichers abgezweigt wird.

Besonders zweckmäßig und vorteilhaft ist es auch, wenn ein von Rohren gebildeter Tragrahmen, der als Druckluft-Reservoir ausgebildet ist, vorgesehen ist, und wenn der Druckspeicher nur von dem Rohr-Druckluft-Reservoir gebildet ist. Der Rohr-Tragrahmen hat also nicht eine reine Reserve-Funktion, sondern die Funktion des ständig gebrauchten Druckspeichers.

Bei einer Ausführungsform der Erfindung ist vorgesehen, daß der Bypass in einer Parallelschaltung mit dem Förderluftventil in einer Überbrückungsleitung angeordnet ist. Bei dieser Gestaltung läßt sich der Bypass vereinfacht verstellbar gestalten bzw. verstellen. Änderungen am Förderluftventil selbst sind nicht erforderlich.

Besonders zweckmäßig und vorteilhaft ist es jedoch auch, wenn der Bypass in das Förderluftventil integriert ist, indem er als Durchgangsloch in Ventilmitteln des Förderluftventils gestaltet ist. Das Förderluftventil schließt im GESCHLOSSEN-Zustand nicht 100 % dicht, sondern läßt durch das Durchgangsloch eine bestimmte Luftmenge durch. Eine zusätzliche Überbrückungsleitung ist entfallen. Das Durchgangsloch läßt sich am Förderluftventil nachträglich relativ einfach anbringen. Es läßt sich eine Verstellbarkeit des Durchgangsloches gestalten. Das Durchgangsloch ist z. B. im beweglichen Ventilstück oder im Ventilgehäuse vorgesehen.

In der Zeichnung sind bevorzugte Ausführungsformen der Erfindung dargestellt und zeigt
- Fig. 1: eine teilweise perspektivische Seitenansicht einer ersten Vorrichtung zum Baustellen-Fördern von Trockenmörtel und
- Fig. 2: ein Förderluftventil, teilweise im Schnitt, einer zweiten Vorrichtung zum Baustellen-Fördern von Trockenmörtel.

Bei der Vorrichtung gemäß Zeichnung ist in einem Drucksilo 1 Trockenmörtel vorgesehen und das Drucksilo ist nach unten hin mit einem von Hand betätigbaren Absperrglied 2 versehen. Der Trockenmörtel gelangt durch das geöffnete Absperrglied 2 zu einem druckluftgesteuerten Trockenmörtel-Ventil 3. Durch das geöffnete Trockenmörtel-Ventil 3 gelangt der Trockenmörtel in ein Förderrohr 4 und von diesem in einen Zwischenspeicher 5. Auf dem Zwischenspeicher 5 sitzt ein Filter 6 und der Zwischenspeicher gehört zu einer Mischeinrichtung 7, die sich auf einem Fahrwerk 8 befindet. Das Förderrohr 4 bildet kurz nach dem Trockenmörtel-Ventil 3 ein Knie 9.

Ein motorgetriebener Druckluft-Kompressor 10 arbeitet auf eine Förderluftleitung 11, die bei dem Knie 9 in das Förderrohr 4 mündet. Ausgehend von dem Druckluft-Kompressor 10 ist die Förderluftleitung 11 zunächst mit der Abzweigung einer Nebenluftleitung 12 versehen. Danach folgt die Anordnung eines Bypasses 13 und eines Förderluftventils 14. Daran schließen sich ein Rückschlagventil 15 und ein Sicherheitsventil 16 an. Dann folgt die Abzweigung einer Speicherluftleitung 17. Zwischen dieser Abzweigung und dem Knie 9 sind noch ein Sperrglied 18 und ein Rückschlagventil 19 vorgesehen. In der Speicherluftleitung 17, die in das Drucksilo 1 führt, sind ein Sperrglied 20 und ein Rückschlagventil 21 vorgesehen. Das Drucksilo 1 wird am Beginn des Betriebs der Vorrichtung unter einem Druck von 1,7 bar gesetzt, indem bei tätigem Druckluft-Kompressor 10 das Sperrglied 18 geschlossen und das Sperrglied 20 geöffnet wird. Beim weiterem Betrieb der Vorrichtung ist das Sperrglied 20 geschlossen und das Sperrglied 18 geöffnet.

Die Nebenluftleitung 12 führt über zwei Rückschlagventile 22 zu einem kleinen Druckspeicher 23, der über eine Ventilluftleitung 24 auf das Trockenmörtel-Ventil 3 arbeitet. In der Ventilluftleitung 24 sitzt ein Steuerluftventil 25, das wahlweise Druckluft von dem Trockenmörtel-Ventil abläßt oder Druckluft zu dem Trockenmörtel-Ventil hinlenkt. Es ist eine Schalteinheit 26 vorgesehen, die an eine Füllstandssonde 27 angeschlossen ist, die im Zwischenspeicher 5 angeordnet ist. Die Schalteinheit 26 arbeitet über eine Steuerleitung 28 auf den Druckluft-Kompressor 10, über eine Steuerleitung 29 auf das Förderluftventil 14 und über eine Steuerleitung 30 auf das Steuerluftventil 25. Die Füllstandssonde zeigt an, wenn ein Minimum an Trockenmörtel im Zwischenspeicher 5 unterschritten ist und wenn ein Maximum an Trockenmörtel im Zwischenspeicher überschritten ist.

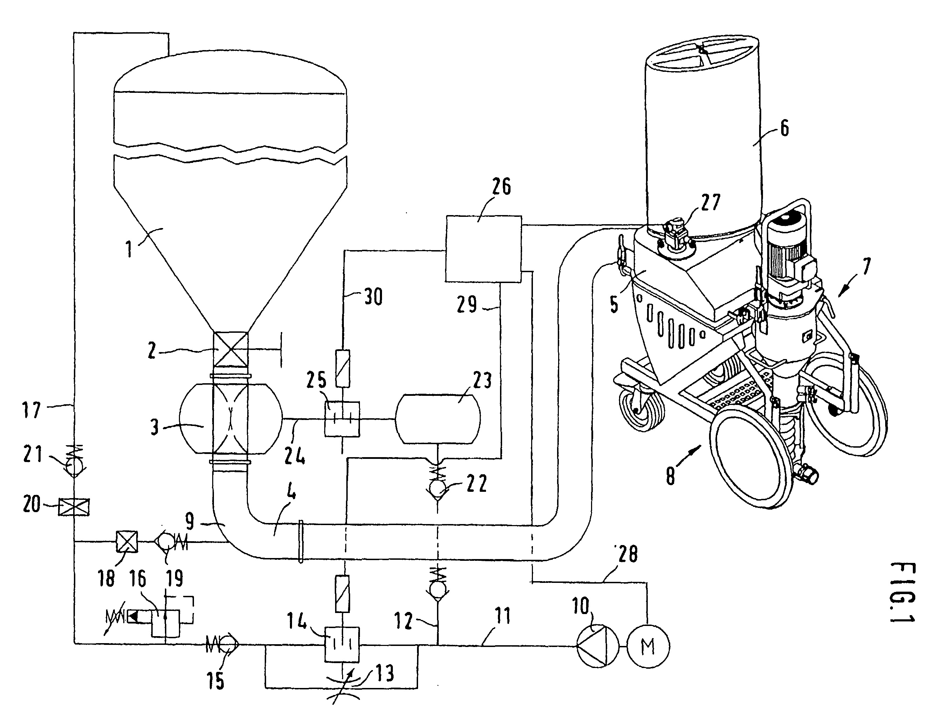

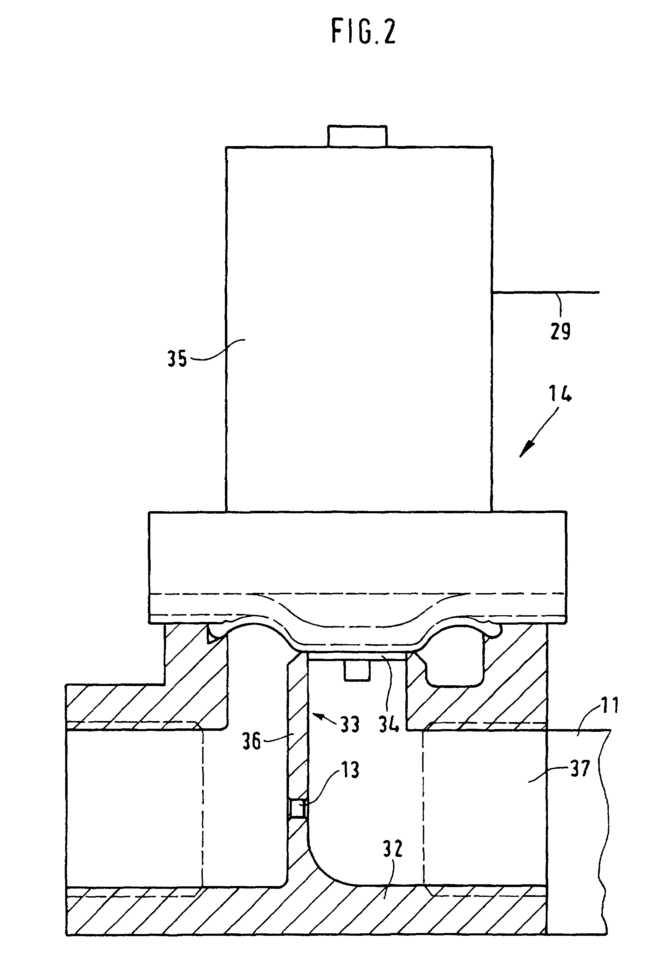

Bei der Ausführungsform gemäß Fig. 1 ist der Bypass 13 als eigenständiges Organ in Parallelschaltung mit dem Förderluftventil 14 vorgesehen, wobei er in einer Überbrückungsleitung 31 angeordnet ist, die das Förderluftventil 14 in seiner Gesamtheit überbrückt. Dieser Bypass 13 ist verstellbar. Bei der Ausführungsform gemäß Fig. 2 ist der Bypass 13 als ein Durchgangsloch des Förderluftventils 14 vorgesehen, das ein Ventilgehäuse 32, einen Ventilsitz 33 und ein hin- und herbewegbares Ventilstück 34 umfaßt. Für das Ventilstück 34 ist eine Betätigungseinrichtung 35 vorgesehen. Der Durchgangsloch-Bypass 13 ist in einer Sitzwand 36 des Ventilsitzes 33 angeordnet, wobei diese Sitzwand von zumindest einem der beiden Anschlüsse 37 des Ventilgehäuses 32 her geradlinig zugänglich ist, um das Durchgangsloch nachträglich zu erzeugen.

## Patentansprüche

1. Vorrichtung zum Baustellen-Fördern von Trockenmörtel,
bei der eine Fördereinheit eingangsseitig an ein Drucksilo (1) zur Aufnahme des Trockenmörtels angeschlossen ist und ausgangsseitig in einem Zwischenspeicher (5) zur weiteren Verarbeitung des Trockenmörtels mündet,
bei dem die Fördereinheit anschließend an das Drucksilo (1) ein druckluftbetätigtes Trockenmörtel-Ventil (3) und ein von diesem zu dem Zwischenspeicher (5) führendes Förderrohr (4) aufweist,
bei der ein Druckluft-Kompressor (10) an das Förderrohr (4) über eine Förderluftleitung (11) angeschlossen ist, in der ein Förderluftventil (14) angeordnet ist und
bei der vor dem Förderluftventil von der Förderluftleitung eine Nebenluftleitung (12) zu einem Druckspeicher (23) abzweigt, der über ein Steuerluftventil (25) auf das Trockenmörtel-Ventil arbeitet,
bei der eine im Zwischenspeicher angeordnete Füllstandssonde (27) einer Steuereinheit (26) zugehört, die über Steuerleitungen (28, 29, 30) auf den Druckluft-Kompressor, das Förderluftventil und das Steuerluftventil arbeitet,
bei der bei tätigem Druckluft-Kompressor das Förderluftventil während einer Ladezeit für ein Aufladen des Druckspeichers auf GESCHLOSSEN gesteuert ist und
bei der für einen von der Füllstandssonde geforderten Fördervorgang der Druckluft-Kompressor auf AN, das Trockenmörtel-Ventil auf OFFEN und das Förderluftventil auf OFFEN gesteuert sind,
**dadurch gekennzeichnet,**
**daß** das Förderluftventil (14) von einem Bypass (13) überbrückt ist und
**daß** bei jedem Fördervorgang das Förderluftventil (14) anfangs für die Ladezeit auf GESCHLOSSEN gesteuert ist.

2. Vorrichtung nach Anspruch 1, **dadurch gekennzeichnet, daß** die Durchlaßquerschnitte des Förderluftventils (14) und des Bypasses (13) derart gestaltet sind, daß eine normalerweise benötigte Förderluftmenge zu 50 - 70 % durch den Bypass und zu 50 - 30 % durch das Förderluftventil strömt.

3. Vorrichtung nach Anspruch 1 oder 2, **dadurch gekennzeichnet, daß** ein von Rohren gebildeter Tragrahmen, der als Druckluft-Reservoir ausgebildet ist, vorgesehen ist und daß der Druckspeicher (23) nur von dem Rohr-Druckluft-Reservoir gebildet ist.

4. Vorrichtung nach Anspruch 1, 2 oder 3, **dadurch gekennzeichnet, daß** der Bypass (13) in einer Parallelschaltung mit dem Förderluftventil (14) in einer Überbrückungsleitung (31) angeordnet ist.

5. Vorrichtung nach Anspruch 1, 2 oder 3, **dadurch gekennzeichnet, daß** der Bypass (13) in das Förderluftventil (14) integriert ist, indem er als Durchgangsloch in Ventilmitteln (33, 36) des Förderluftventils gestaltet ist.

## Claims

1. Device for conveying dry mortar at a construction site, in which a conveying unit is connected on the input side to a pressure silo (1) to receive the dry mortar and on the output side leads into an intermediate store (5) for further processing of the dry mortar, in which the conveying unit, following the pressure silo (1), has a dry mortar valve (3) actuated by compressed air and a, conveying pipe (4) leading from the latter to the intermediate store (5), in which a compressed-air compressor (10) is connected to the conveying pipe (4) via a conveying-air pipe (11), in which a conveying-air valve (14) is arranged and in which upstream of the conveying-air valve, an additional air pipe (12) to a pressure tank (23) branches off from the conveying-air pipe, which pressure tank (23) acts on the dry mortar valve via a control-air valve (25), in which a level probe (27) arranged in the intermediate store belongs to a control unit (26), which acts on the compressed-air compressor, the conveying-air valve and the control-air valve via control pipes (28, 29, 30), in which when the compressed-air compressor is active, the conveying-air valve is turned to CLOSED during a charging time for charging the pressure tank and in which for a conveying process required by the level probe, the compressed-air compressor is turned to ON, the dry mortar valve to OPEN and the conveying-air valve to OPEN, **characterised in that** the conveying-air valve (14) is bridged by a bypass (13) and **in that** for each conveying process, the conveying-air valve (14) is turned to CLOSED at the start for the charging time.

2. Device according to claim 1, **characterised in that** the flow cross-sections of the conveying-air valve (14) and of the bypass (13) are designed such that 50 - 70 % of a normally required conveying-air quantity flows through the bypass and 50 - 30 % through the conveying-air valve.

3. Device according to claim 1 or 2, **characterised in that** a support frame formed by pipes, which is designed as a compressed-air reservoir, is provided and **in that** the pressure tank (23) is formed only by the pipe-compressed-air reservoir.

4. Device according to claim 1, 2 or 3, **characterised in that** the bypass (13) is arranged in a parallel connection with the conveying-air valve (14) in a bridging pipe (31).

5. Device according to claim 1, 2 or 3, **characterised in that** the bypass (13) is integrated into the conveying-air valve (14), **in that** it is designed as a passage hole in valve means (33, 36) of the conveying-air valve.

## Revendications

1. Dispositif pour convoyer du mortier sec sur le chantier,
dans lequel une unité de convoyage est raccordée, côté entrée, à un silo sous pression (1) pour la réception du mortier sec et débouche côté sortie, dans un réservoir de stockage intermédiaire (5) en vue du traitement ultérieur du mortier sec,
dans lequel l'unité de convoyage présente en aval du silo de pression (1), une vanne de mortier sec (3) actionnée par de l'air comprimé et un tuyau de convoyage (4) menant de celle-ci au réservoir de stockage intermédiaire (5),
dans lequel un compresseur à air comprimé (10) est raccordé au tuyau de convoyage (4) par un conduit d'air de convoyage (11) dans lequel est disposée une vanne d'air de convoyage (14) et
dans lequel, en amont de la vanne d'air de convoyage, se sépare du conduit d'air de convoyage un conduit d'air secondaire (12) vers un réservoir de stockage sous pression (23) qui opère par une vanne d'air de commande (25) sur la vanne de mortier sec,
dans lequel une sonde de niveau de remplissage (27) disposée dans le réservoir de stockage intermédiaire fait partie d'une unité de commande (26) qui opère par des lignes de commande (28,29,30) sur le compresseur d'air comprimé, la vanne d'air de convoyage et la vanne d'air de commande,
dans lequel, lorsque le compresseur à air comprimé est en activité, la vanne d'air de commande, pendant un temps de charge pour charger le réservoir de stockage sous pression, est commandée à l'état FERME et
dans lequel, pour une opération de convoyage demandée par la sonde de niveau de remplissage, le compresseur à air comprimé est commandé à l'état en service, la vanne de mortier sec à l'état OUVERT et la vanne d'air de convoyage à l'état OUVERT,
**caractérisé en ce que** la vanne d'air de convoyage (14) est pontée par une dérivation (13) et
**en ce qu'**à chaque opération de convoyage, la vanne d'air de convoyage (14) est commandée au début pendant le temps de charge à l'état FERME.

2. Dispositif selon la revendication 1, **caractérisé en ce que** les sections transversales de passage de la vanne d'air de convoyage (14) et de la dérivation (13) sont configurées de façon qu'une quantité d'air de convoyage requise normalement s'écoule selon 50-70 % à travers la dérivation et selon 50-30 % à travers la vanne d'air de convoyage.

3. Dispositif selon la revendication 1 ou 2, **caractérisé en ce qu'**un châssis de support formé par des tuyaux, qui est réalisé comme réservoir d'air comprimé, est prévu, et **en ce que** le réservoir de pression (23) est formé seulement par le réservoir d'air comprimé de tuyau.

4. Dispositif selon la revendication 1, 2 ou 3, **caractérisé en ce que** la dérivation (13) est disposée dans un montage parallèle avec la vanne d'air de convoyage (14) dans un conduit de pontage (31).

5. Dispositif selon la revendication 1, 2 ou 3, **caractérisé en ce que** la dérivation (13) est intégrée dans la vanne d'air de convoyage (14), **en ce qu'**elle est réalisée comme trou traversant dans des moyens de vanne (33,36) de la vanne d'air de convoyage.
